# EUROPÄISCHE PATENTANMELDUNG

(11) **EP 2 468 154 A1**
(43) Veröffentlichungstag der Anmeldung: **27.06.2012**
(21) Anmeldenummer: 10405246.9
(22) Anmeldetag: 23.12.2010
(51) Int. Cl.: A47J 31/46

(54) **Brühvorrichtung zum Erzeugen eines Kaffeegetränks sowie Verfahren zum Erzeugen eines Kaffeegetränks mit einer Brühvorrichtung**

(71) Anmelder: Jura Elektroapparate AG, 4626 Niederbuchsiten (CH)
(72) Erfinder: Reyhanloo, Shahryar, 4573 Lohn-Ammannsegg (CH)
(74) Vertreter: EGLI-EUROPEAN PATENT ATTORNEYS

(57) **Zusammenfassung**

Die Brühvorrichtung (10) zum Erzeugen eines Kaffeegetränks weist eine Brüheinheit (11) mit einer Brühkammer (12) zum Brühen von Kaffee, eine Cremaeinheit (21) zur Erzeugung einer Crema mit einer mit der Brühkammer (11) über einen Kaffeedurchlass (214) verbundene Cremakammer (200) und einem in der Cremakammer (200) relativ zum Kaffeedurchlass (214) verfahrbaren Ventilkolben (201) zum Öffnen und/oder Verschliessen des Kaffeedurchlasses (214) und eine Auslassmündung (31) für das jeweilige Kaffeegetränk auf, wobei die Cremaeinheit (21) mit der Auslassmündung (31) mittels einer Auslassleitung (30) derart verbunden ist, dass zum Erzeugen des jeweiligen Kaffeegetränks während eines Brühvorgangs in der Brüheinheit (11) gebrühter Kaffee den Kaffeedurchlass (214) und die Cremakammer durchströmen und zur Auslassmündung (31) gelangen kann. Der Ventilkolben (201) ist derart verfahrbar, dass er in mehrere verschiedene vorgegebene Verfahrpositionen relativ zu dem Kaffeedurchlass (214) bringbar ist, wobei verschiedene aufeinanderfolgende Brühvorgänge zur Erzeugung verschiedener Kaffeegetränke derart realisierbar sind, dass der Ventilkolben (201) bei einem der jeweiligen Brühvorgänge eine andere der vorgegebenen Verfahrpositionen einnimmt als bei einem anderen der jeweiligen Brühvorgänge, und wobei die Cremaeinheit (21) derart ausgebildet ist, dass der während des jeweiligen Brühvorgangs gebrühte Kaffee in der Cremakammer (200) abhängig von der jeweiligen vorgegebenen Verfahrposition des Ventilkolbens (201) unterschiedlich stark durchwirbelbar ist.

## Beschreibung

Die vorliegende Erfindung betrifft eine Brühvorrichtung zum Erzeugen eines Kaffeegetränks mit einer in einem Kaffeeauslauf angeordneten Cremaeinheit, mit welcher eine Crema erzeugbar ist. Die Erfindung betrifft weiterhin ein Verfahren zum Erzeugen eines Kaffeegetränkes mit einer solchen Brühvorrichtung.

Insbesondere betrifft die Erfindung eine Brühvorrichtung mit einer speziell ausgebildeten Cremaeinheit, mittels welcher es möglich ist, die pro Brühvorgang erzeugte Menge an Crema zu variieren.

Eine Brühvorrichtung mit der Möglichkeit, die Menge einer während des Brühvorganges erzeugten Crema zu erhöhen, ist beispielsweise aus der EP 2 168 465 A1 bekannt. Die dort beschriebene Brühvorrichtung ist mit einem sogenannten Cremaventil ausgestattet, welches zwischen der Brüheinheit und dem Kaffeeauslass angeordnet ist und mittels eines druckfederbelasteten Verschlusspfropfens den Ausfluss des in der Brüheinheit gebrühten Kaffees in die Kaffeeauslassleitung begrenzt. Dadurch, dass der gebrühte Kaffee unter Druck in Richtung des Verschlusspfropfens gedrückt wird, gibt die Druckfeder bei genügend hohem Brühwasserdruck einen Ringspalt frei, durch welchen der gebrühte Kaffee in die Ausgabeleitung fliessen kann. Dadurch, dass dieser entstehende Ringspalt eine begrenzte Grösse aufweist, entstehen beim Durchtritt des gebrühten Kaffees Turbulenzen. Durch dieses Durchwirbeln des gebrühten Kaffees entsteht ein feinporiger Schaum, welcher als Crema bezeichnet wird.

Um nun die Menge der auf diese Weise erzeugten Crema erhöhen zu können, weist die herkömmliche Brühvorrichtung einen Gasinjektor auf, mit welchem ein Gas unter variablem Druck und mit variabler Dosis in die Cremakammer eingeleitet werden kann. Durch dieses zusätzliche Verwirbeln des Kaffees innerhalb der Cremakammer, also nach dem Durchtritt durch den Ringspalt, wird auf diese Weise die Menge der erzeugten Crema in der herkömmlichen Brühvorrichtung vergrössert. Während es also mittels der herkömmlichen Brühvorrichtung möglich ist, die Menge einer klassisch erzeugten Crema durch Einleiten eines Gases in die Cremakammer künstlich zu erhöhen, so ist ein Vermindern der Menge der jeweils erzeugten Crema auf ein Minimum nicht vorgesehen.

Ausserdem bestehen durch die regional stark unterschiedlichen Kaffeekulturen und die sich daraus ergebenden unterschiedlichen Kaffeegetränke wie beispielsweise Cappuccino, Latte Macchiato, Espresso unterschiedliche persönliche Geschmäcker, wobei hinsichtlich der Menge und der Porengrösse der Crema auch der Wunsch besteht, weniger bzw. grobporigere Crema zu erzeugen, bis hin zu Kaffeegetränken, welche gänzlich ohne Cremaschicht aus der Brühvorrichtung ausgegeben werden sollen.

Durch die Verwendung des druckfederbelasteten Ventils in der herkömmlichen Brühvorrichtung besteht weiterhin die Gefahr, dass sich beispielsweise Getränkereste im Ventillauf absetzen und dieses druckfederbelastete Ventil derart verkleben, dass die Leichtgängigkeit des Ventils beeinträchtigt ist. Ein solches druckfederbelastetes, verklebtes Ventil hält dann unter Umständen einem grösseren Druck des Brühwassers stand, bevor es den Ringspalt zum Durchtritt des gebrühten Kaffeegetränkes freigibt. Während sich hierdurch eine Veränderung der Beschaffenheit der Crema ergeben kann, führt ein solches Verkleben im schlimmsten Falle dazu, dass sich das Ventil bei genügend grossem Brühwasserdruck plötzlich löst und somit gegen die Rückstellkraft der Feder schlagartig öffnet. Durch den somit erfolgenden ebenso schlagartigen Austritt des Kaffees in den Kaffeeauslauf kann es so beispielsweise passieren, dass der Kaffee mit einem zu hohen Anfangsdruck aus dem Kaffeeauslauf herausspritzt und zu einem unbefriedigenden Kaffeeergebnis führt.

Ein weiterer Nachteil der herkömmlichen Brühvorrichtung ist, dass sich durch die Federbelastung des Cremaventils während des Stillstandes der Brühvorrichtung, also beispielsweise nach einem erfolgten Brühvorgang, in der Kaffeeauslassleitung verbliebenes Kaffeewasser gegen das Cremaventil staut und nicht zurück in die Brühkammer fliessen kann. Bei einem anschliessend erfolgenden Brühvorgang wird zunächst diese Restflüssigkeit am Kaffeeauslass ausgegeben, bevor der frisch gebrühte Kaffee den Kaffeeauslass erreicht. Bei längerer Stillstandszeit zwischen aufeinanderfolgenden Brühvorgängen ist es dann möglich, dass sich diese Restflüssigkeit derart abgekühlt hat, dass sich dies negativ auf die Temperatur des ausgegebenen Kaffeegetränkes auswirkt.

Der vorliegenden Erfindung liegt die Aufgabe zugrunde, die genannten Nachteile zu vermeiden und eine Brühvorrichtung zum Erzeugen eines Kaffeegetränks sowie ein Verfahren anzugeben, welche es ermöglichen, die Menge der jeweils erzeugten Crema in einem grossen Bereich zu variieren und ein schlagartiges Öffnen eines Cremaventils zu vermeiden. Dabei soll auch nach einer längeren Stillstandszeit der Brühvorrichtung die Temperatur des ausgegebenen Kaffees möglichst konstant sein.

Diese Aufgabe wird gelöst durch eine Brühvorrichtung mit den Merkmalen des Patentanspruches 1 und ein Verfahren mit den Merkmalen des Patentanspruches 8. Die erfindungsgemässe Brühvorrichtung zum Erzeugen eines Kaffeegetränks weist eine Brüheinheit mit einer Brühkammer zum Brühen von Kaffee, eine Cremaeinheit zur Erzeugung einer Crema mit einer mit der Brühkammer über einen Kaffeedurchlass verbundene Cremakammer und einem in der Cremakammer relativ zum Kaffeedurchlass verfahrbaren Ventilkolben zum Öffnen und/oder Verschliessen des Kaffeedurchlasses und eine Auslassmündung für das jeweilige Kaffeegetränk auf, wobei die Cremaeinheit mit der Auslassmündung mittels einer Auslassleitung derart verbunden ist, dass zum Erzeugen des jeweiligen Kaffeegetränks während eines Brühvorgangs in der Brüheinheit gebrühter Kaffee den Kaffeedurchlass und die Cremakammer durchströmen und zur Auslassmündung gelangen kann.

Gemäss der Erfindung ist der Ventilkolben derart verfahrbar, dass er in mehrere verschiedene vorgegebene Verfahrpositionen relativ zu dem Kaffeedurchlass bringbar ist, wobei verschiedene aufeinanderfolgende Brühvorgänge zur Erzeugung verschiedener Kaffeegetränke derart realisierbar sind, dass der Ventilkolben bei einem der jeweiligen Brühvorgänge eine andere der vorgegebenen Verfahrpositionen einnimmt als bei einem anderen der jeweiligen Brühvorgänge, und wobei die Cremaeinheit derart ausgebildet ist, dass der während des jeweiligen Brühvorgangs gebrühte Kaffee in der Cremakammer abhängig von der jeweiligen vorgegebenen Verfahrposition des Ventilkolbens unterschiedlich stark durchwirbelbar ist.

Eine erste vorgegebene Verfahrposition des Ventilkolbens kann beispielsweise so gewählt sein, dass der Ventilkolben den Kaffeedurchlass dicht verschliesst, sodass Flüssigkeiten nicht aus der Brühkammer in die Cremakammer fliessen kann. In diesem Fall kann beispielsweise Brühwasser in die Brühkammer geleitet und unter Druck gesetzt werden, sodass Kaffee in der Brühkammer bei einem relativ hohen Druck des Brühwassers gebrüht werden kann. In diesem Fall ermöglicht die Brühvorrichtung beispielsweise die Zubereitung eines Kaffeegetränks in Form von Espresso. Weitere vorgegebene Verfahrpositionen des Ventilkolbens können so gewählt sein, dass der Ventilkolben jeweils verschiedene vorgegebene Abstände von einer Mündung des Kaffeedurchlasses in die Cremakammer aufweist.

Die Brühvorrichtung ermöglicht es, den Ventilkolben bei verschiedenen aufeinanderfolgenden Brühvorgängen (zur Erzeugung verschiedener Kaffeegetränke) jeweils an verschiedenen vorgegebenen Verfahrpositionen zu positionieren oder den Ventilkolben während eines Brühvorgangs zwischen verschiedenen vorgegebenen Verfahrpositionen zu bewegen. Dabei beeinflusst die jeweilige Verfahrposition, welche der Ventilkolben während eines Brühvorgangs einnimmt, jeweils die Grösse des Drucks des Brühwassers in der Brühkammer (im Folgenden "Brühwasser-Druck") während des Brühvorgangs und die Geschwindigkeit, mit welcher der in der Brühkammer gebrühte Kaffee durch den Kaffeedurchlass in die Cremakammer und anschliessend durch die Auslassleitung fliesst, und somit auch die momentane Durchflussrate des gebrühten Kaffees im Kaffeedurchlass bzw. der Auslassleitung.

Dadurch, dass der Verfahrweg des Ventilkolbens, also sinngemäß die Einführtiefe des Ventilkolbens in die Cremakammer und weiterhin auch der Anpressdruck des Ventilkolbens gegen den Kaffeedurchlass variiert werden können, kann der Verwirbelungsgrad des durch den Kaffeedurchlass gedrückten gebrühten Kaffees bezogen auf einen Brühvorgang des Kaffeegetränkes variiert werden. Durch Variieren des Verwirbelungsgrades ist es so möglich, die Menge und die Porengröße der Crema in einem weiten Bereich zu verändern.

Wird beispielweise die jeweilige Verfahrposition des Ventilkolbens während eines Brühvorgangs so gewählt, dass der Kaffee in der Brühkammer bei einem relativ hohen Brühwasser-Druck gebrüht wird und mit einer relativ hohen Geschwindigkeit in die Cremakammer strömt, so wird der gebrühte Kaffee in der Cremakammer relativ stark verwirbelt, mit dem Ergebnis, dass ein Kaffeegetränk (z.B. Espresso) mit einer relativ grossen Menge Crema auf dem Kaffeegetränk entsteht. Wird andererseits die jeweilige Verfahrposition des Ventilkolbens während eines Brühvorgangs so gewählt, dass der Kaffee in der Brühkammer bei einem relativ kleinen Brühwasser-Druck gebrüht wird und mit einer relativ kleinen Geschwindigkeit in die Cremakammer strömt, so wird der gebrühte Kaffee in der Cremakammer nicht oder nur geringfügig verwirbelt, mit dem Ergebnis, dass ein Kaffeegetränk ohne Crema (z.B. ein Kaffeegetränk mit der Konsistenz von Filterkaffee) oder ein Kaffeegetränk mit einer relativ kleinen Menge Crema auf dem Kaffeegetränk entsteht. Dementsprechend können mit der erfindungsgemässen Brühvorrichtung verschiedene Kaffeegetränke unterschiedlicher Konsistenz und einer variablen Menge Crema auf dem jeweiligen Kaffeegetränk hergestellt werden.

Als weiterer Vorteil gegenüber der herkömmlichen, aus dem Stand der Technik bekannten Brühvorrichtung ist bei der erfindungsgemässen Lösung zu nennen, dass durch das variable Verfahren oder Verschieben des Ventilkolbens - also ohne (wie bei konventionellen Brühvorrichtungen üblich) von einem Wechselspiel von einem auf den Ventilkolben wirkenden Brühwasser-Druck und einer auf den Ventilkolben wirkenden Rückstellkraft einer Feder abhängig zu sein - ein Öffnen des Kaffeedurchlasses auch nach einem erfolgten Brühvorgang möglich ist, sodass eine gegebenenfalls nach dem Brühvorgang in der Cremakammer oder der Auslassleitung vorhandene Restflüssigkeit in die Brühkammer zurückfliessen kann. Diese Restflüssigkeit kann anschliessend einem Sammelbehälter, beispielsweise einer Restwasserschale zugeführt werden. Hierdurch wird verhindert, dass sich die Temperatur des beim nächsten Brühvorgang ausgegebenen Kaffees reduziert.

Schliesslich ist es vorteilhaft, dass durch das geführte Verfahren oder Verschieben des Ventilkolbens ein plötzliches Zurückschnellen des Ventils vermieden wird, selbst wenn das Ventil beispielsweise durch Kaffeerückstände verklebt ist.

Eine Ausführungsform der erfindungsgemässen Brühvorrichtung zeichnet sich dadurch aus, dass die Brühvorrichtung ferner eine Steuereinrichtung und ein Stellglied aufweist. Das Stellglied ist mit dem verfahrbaren Ventilkolben gekoppelt und dazu geeignet, dessen Verfahrposition bzw. Eintauchtiefe in der Cremakammer zu verändern. Das Stellglied empfängt ein Stellsignal von der Steuereinrichtung, wobei das von der Steuereinrichtung ausgegebene Stellsignal beispielsweise der anzufahrenden Position des Ventilkolbens, d.h. einer der vorgegebenen Verfahrpositionen des Ventilkolbens, entspricht. Hierdurch ist es möglich, die Beschaffenheit der erzeugten Crema in einem weiten Bereich und besonders fein zu variieren.

Weiterhin ist es vorgesehen, dass die Steuereinrichtung als Regler ausgebildet ist und die Brühvorrichtung weiterhin eine Sollwert-Vorgabeeinrichtung und einen Messfühler aufweist. Der Messfühler erfasst eine Messgrösse und führt diese dem Regler als Messsignal zu, wobei der Regler derart ausgelegt ist, dass ein von der Sollwert-Vorgabeeinrichtung vorgegebener Sollwert durch Verfahren bzw. Verschieben des Ventilkolbens erhalten wird.

Weiterhin ist es bei der Ausbildung als Regler auch möglich, keinen statischen Sollwert, sondern einen zeitlichen Sollwertverlauf vorzugeben. Hierdurch ist es möglich, die Menge und Beschaffenheit der erzeugten Crema in einem weiten Bereich zu variieren.

Der Messfühler kann dabei beispielsweise als Drucksensor ausgebildet sein, welcher durch eine entsprechende Anordnung den Druck innerhalb der Brühkammer erfasst. Durch eine entsprechende Auslegung des Reglers, welcher von einem solchen Drucksensor einen Druckmesswert empfängt, ist es möglich, den Verfahrweg des Ventilkolbens derart zu regeln, dass sich beispielsweise ein vorgegebener statischer Druck, welcher in Form eines zeitlich statischen Drucksollwertes vorgegeben ist, innerhalb der Brühkammer einstellt. Selbstverständlich ist es auch möglich, einen über den Brühvorgang zeitlich variablen Drucksollwert vorzugeben, sodass ein Druckverlauf während des Brühvorganges mit Hilfe des Reglers abgefahren wird.

Des Weiteren ist es auch möglich, den Messfühler als Positionssensor auszubilden, wobei ein solcher Positionssensor derart montiert ist, dass er die momentane Verfahrposition des Ventilkolbens detektieren kann. Hier kann dann ein Verfahrpositionssollwert vorgegeben werden, welcher wiederum zeitlich statisch oder zeitlich variabel sein kann.

Der besondere Vorteil hierbei ist, dass der Momentandruck des Brühwassers in der Brühkammer, aber auch die momentane Verfahrposition des Ventilkolbens mittels der unterschiedlichen Messfühler sehr präzise gemessen werden können, was bei entsprechender Sollwertvorgabe eine sehr gut reproduzierbare Beschaffenheit der Crema auf dem jeweils ausgegebenen Kaffeegetränk gewährleistet.

Das Stellglied kann beispielsweise als elektromechanischer Antrieb (z.B. als Schrittmotor) ausgebildet sein, was eine besonders einfache Ansteuerung in Bezug auf die Verfahrposition des Ventilkolbens erlaubt.

Weiterhin ist es auch vorgesehen, die Cremaeinheit und das Stellglied in einem Brühkolben der Brühvorrichtung anzuordnen, was den besonderen Vorteil hat, dass sich das Gesamtvolumen der Brühvorrichtung im Vergleich zu einer herkömmlichen Vorrichtung durch die erfindungsgemässe Ausgestaltung nicht vergrössert.

Alternativ kann die Cremaeinheit zusammen mit dem Stellglied auch als eine separate Baugruppe ausgebildet sein, welche von der Brüheinheit räumlich getrennt angeordnet werden kann. In diesem Fall kann die Cremaeinheit mittels einer Rohrleitung bzw. einem Schlauch an die Brüheinheit angeschlossen werden. Zu diesem Zweck kann beispielsweise die Distanz zwischen einer Austrittsöffnung der Brühkammer für den jeweils gebrühten Kaffee und dem Kaffeedurchlass der Cremakammer mit der jeweiligen Rohrleitung bzw. dem jeweiligen Schlauch überbrückt werden, so dass der jeweils gebrühte Kaffee aus der Brühkammer über die jeweilige Rohrleitung bzw. den jeweiligen Schlauch in die Cremakammer strömen kann. Dabei kann die Austrittsöffnung der Brühkammer beispielsweise im Brühkolben ausbildet sein und ein Ende der jeweiligen Rohrleitung bzw. des jeweiligen Schlauchs am Brühkolben befestigt sein. Dadurch, dass die Cremaeinheit zusammen mit dem Stellglied als eine separate Baugruppe ausgebildet ist, kann die Cremaeinheit auch unabhängig von der Brüheinheit (beliebig) platziert werden. Das hat den Vorteil, dass die Cremaeinheit gegebenenfalls an bereits existierenden Brüheinheiten nachrüstbar ist, selbst wenn die Brüheinheit nicht genügend Platz bietet, um die Cremaeinheit und das Stellglied in die Brüheinheit zu integrieren.

Es ist vorgesehen und möglich, dass der Sollwert, welcher mittels der Sollwert-Vorgabeeinrichtung erzeugt wird, durch ein gespeichertes Cremaprofil vorgegeben wird. Dieses Profil kann beispielsweise in einer die erfindungsgemässe Brühvorrichtung aufnehmenden Kaffeemaschine in die Steuerungsautomatik integriert sein und einer Crema mit vorbestimmten Eigenschaften zugeordnet sein. Durch Wahl des entsprechenden Profils ist es somit möglich, dass das ausgegebene Kaffeegetränk durch eine dann automatische Vorgabe des Sollwertes eine Crema ausbildet, welche bestimmte gewünschte Eigenschaften hat. Hierdurch ist es in besonders vorteilhafter Weise möglich, die Menge und/oder Eigenschaften der Crema (z.B. Konsistenz oder Geschmack der Crema) von Brühvorgang zu Brühvorgang in einem weiten Bereich automatisch, beispielsweise nach Benutzervorgabe, verändern zu können.

In der Regel ist es vorgesehen, dass zwischen der Cremaeinheit und der Brühkammer am oder im Kaffeedurchlass ein Kaffeesieb angeordnet ist, welches einen Übertritt des gemahlenen Kaffees in die Cremakammer verhindert. Gemäss der Erfindung kann dieses Kaffeesieb nach dem Ende eines Brühvorgangs und nach einem Verfahren des Ventilkolbens in eine Position, welche ein Zurückfliessen der in der Auslassleitung verbliebenen Flüssigkeit in die Brühkammer erlaubt, mittels der in die Brühkammer zurückfliessenden Flüssigkeit gespült werden, sodass in diesem Kaffeesieb nur geringe Kaffeerückstände nach einem Brühvorgang verbleiben.

Im Folgenden werden Ausführungsbeispiele der erfindungsgemässen Brühvorrichtung zum Erzeugen eines Kaffeegetränkes und des erfindungsgemässen Verfahrens anhand einer Zeichnung näher erläutert. Es zeigen:
- Fig. 1: eine schematische Darstellung einer erfindungsgemässen Brühvorrichtung mit einer Brüheinheit und einer Cremaeinheit;
- Fig. 2: ein schematisches Blockschaltbild der Mess-, Steuerungs- und Regelkomponenten der erfindungsgemässen Vorrichtung;
- Fig. 3: eine seitliche Schnittansicht der Brüheinheit gemäss Fig. 1 mit der Cremaeinheit und einem Schrittmotor;
- Fig. 4: eine weitere seitliche Schnittansicht einer Brüheinheit gemäss Fig. 1 mit Cremaeinheit und Drucksensor;
- Fig. 5: eine schematische Darstellung der erfindungsgemässen Brühvorrichtung ähnlich Fig. 1, jedoch in einem anderen Ausführungsbeispiel mit einem als Positionssensor ausgebildeten und in das Stellglied integrierten Messfühler und einem aus der Cremakammer teilweise herausgefahrenen Ventilkolben;
- Fig. 6: eine schematische Darstellung der Cremaeinheit gemäss Fig. 1 und eines Stellgliedes, welche zusammen eine separate, räumlich getrennt von der Brüheinheit der Brühvorrichtung platzierbare Baugruppe bilden.

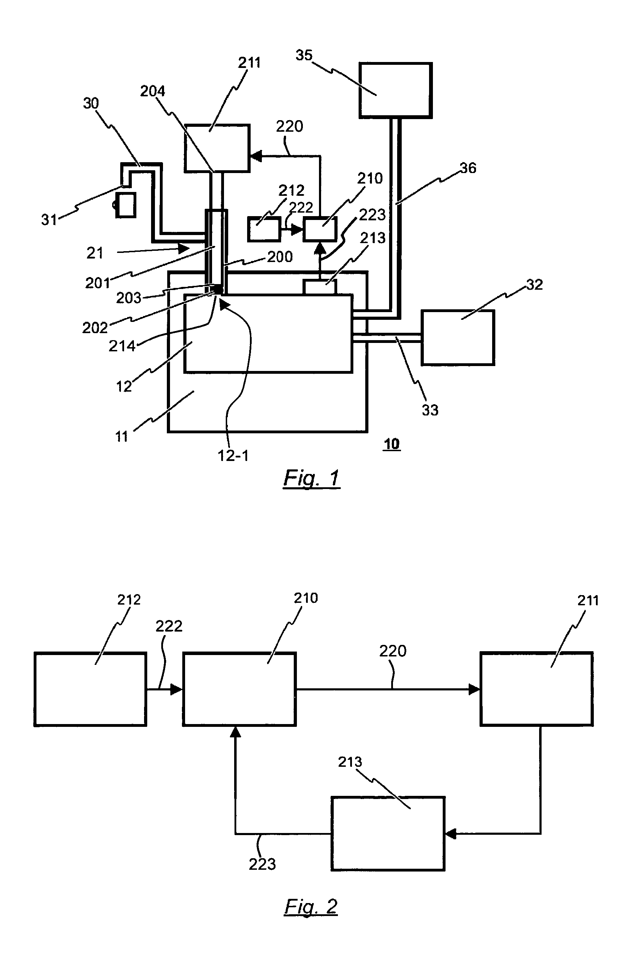

Fig. 1 zeigt die schematische Darstellung einer erfindungsgemässen Brühvorrichtung 10 zum Erzeugen eines Kaffeegetränks. Die Brühvorrichtung 10 beinhaltet in der Darstellung einen Rohkaffeebehälter 35, welchem Rohkaffee beispielsweise in Pulverform automatisiert entnommen werden und durch eine Rohkaffeezuleitung 36 einer Brühkammer 12 einer Brüheinheit 11 zugeleitet werden kann. Die Brühkammer 12 der Brüheinheit 11 ist weiterhin mittels einer Wasserzuleitung 33 mit einem Wassertank 32 verbunden, welcher für die Frischwasserzufuhr sorgt. Die Brühkammer 12 weist weiterhin eine Austrittsöffnung 12-1 für den jeweils gebrühten Kaffee auf. An der Austrittsöffnung 12-1 der Brühkammer 12 ist eine Cremaeinheit 21 angeordnet, welche eine Cremakammer 200 und einen in die Cremakammer 200 hineinragenden Ventilkolben 201 umfasst. Der Ventilkolben 201 umfasst einen Verschlusspfropfen 202, welcher an einem der Brühkammer 12 zugewandten Ende des Ventilkolbens 201 angeordnet ist. Der Ventilkolben 201 ist derart ausgebildet, dass er in seiner Längsrichtung verfahrbar und dabei in mehrere verschiedene vorgegebene Stellungen (im Folgenden "Verfahrpositionen") gebracht werden kann.

In einer der vorgegebenen Stellungen (wie in Fig. 1 angedeutet) verschliesst der Verschlusspfropfen 202 einen Kaffeedurchlass 214, welcher die Brühkammer 12 mit der Cremakammer 200 verbindet, wobei der Kaffeedurchlass 214 an der Austrittsöffnung 12-1 in die Brühkammer 12 mündet. Weiterhin kann der Ventilkolben 201 in seiner Längsrichtung in eine von der Brühkammer 12 abgewandte Richtung (in Fig. 1 nach oben) bewegt werden, sodass der Ventilkolben 201 eine oder mehrere andere vorgegebenen Verfahrpositionen annehmen kann (in Fig. 1 nicht dargestellt), in welchen der Ventilkolben 201 in einem Abstand von dem Kaffeedurchlass 214 angeordnet ist, sodass der Verschlusspfropfen 202 den Kaffeedurchlass 214 nicht mehr verschliesst und gegebenenfalls gebrühter Kaffee aus der Brühkammer 12 in die Cremakammer 200 strömen kann. Der gebrühte Kaffee fliesst, ggf. nach entsprechender Durchwirbelung, in die Cremakammer 200 und wird dort in einem oberen Bereich durch eine Auslassleitung 30 einer Auslassmündung 31 zugeführt. Der Ventilkolben 201 ist mittels eines Stellgliedes 211 derart verfahrbar, dass seine Eintauchtiefe in die Cremakammer 200 in weiten Grenzen variiert werden kann.

Der Verschlusspfropfen 202 besteht beispielsweise aus Gummi oder einem vergleichbaren elastischen Material und dient dazu, einen Anpressdruck an das untere Kammerende der Cremakammer 200 mittels des Stellgliedes 211 variieren zu können. Dadurch kann ein Spalt, welcher sich beim Entfernen des Ventilkolben 201 aus der in Fig. 1 dargestellten Verfahrposition zwischen dem Verschlusspfropfen 202 und dem Kaffeedurchlass 214 bildet, zum Durchlass von Kaffee aus der Brühkammer 12 in die Cremakammer 200 durch Variieren des Anpressdruckes oder ggf. weiteres Anheben des Ventilkolbens 201 derart verändert werden, dass der durch diesen Spalt in die Cremakammer 200 eintretende gebrühte Kaffee eine Crema aufweist, welche hinsichtlich ihrer Beschaffenheit (z.B. Konsistenz oder Geschmack) und/oder der Menge der jeweils erzeugten Crema variabel (veränderbar) ist (abhängig von der jeweiligen Verfahrposition des Ventilkolbens 201). Durch ein weites Verschieben des Ventilkolbens 201 in Richtung seines stellgliedseitigen Endes 204 kann die Menge der erzeugten Crema auch auf ein Minimum reduziert werden.

In dem dargestellten Ausführungsbeispiel ist an der Brühkammer 12 ferner ein als Drucksensor ausgebildeter Messfühler 213 befestigt, welcher den momentanen Wasserdruck des Brühwassers innerhalb der Brühkammer während eines Brühvorganges misst. Ein derart erfasstes Messsignal 223 wird einer als Regler ausgebildeten Steuereinrichtung 210 zugeführt, welche ihrerseits von einer Sollwert-Vorgabeeinrichtung 212 mit einem Vorgabesignal 222 versorgt wird. Die Sollwert-Vorgabeeinrichtung 212 kann eine Regelgrösse wie beispielsweise einen einzuhaltenden Druck oder auch eine mit dem einzuhaltenden Druck korrespondierende Verfahrposition des Ventilkolbens 201 vorgeben, welche die als Regler ausgebildete Steuereinrichtung 210 in ein Stellsignal 220 umsetzt. Dieses Stellsignal 220 wird anschliessend dem Stellglied 211 zugeführt, wobei das Stellglied in der Regel als Motor ausgebildet sein kann, vorzugsweise als Schrittmotor.

Wie aus dem Blockschaltbild in Fig. 2 ersichtlich ist, sind die Steuereinrichtung 210, das Stellglied 211, die Sollwert-Vorgabeeinrichtung 212 sowie der Messfühler 213 in der Form eines einfach zu realisierenden Regelkreises verbunden. Selbstverständlich ist es jedoch auch möglich, keinen regelnden, sondern einen lediglich steuernden Vorgang vorzusehen. In diesem Fall könnte gegebenenfalls auf den in Fig. 2 dargestellten Messfühler 213 verzichtet werden. In diesem Fall könnte dann beispielsweise, falls das Stellglied 211 als Schrittmotor realisiert ist, der mittels der Sollwert-Vorgabeeinrichtung 212 vorgegebene Sollwert beispielsweise die Anzahl der vom Schrittmotor auszuführenden Schritte beinhalten.

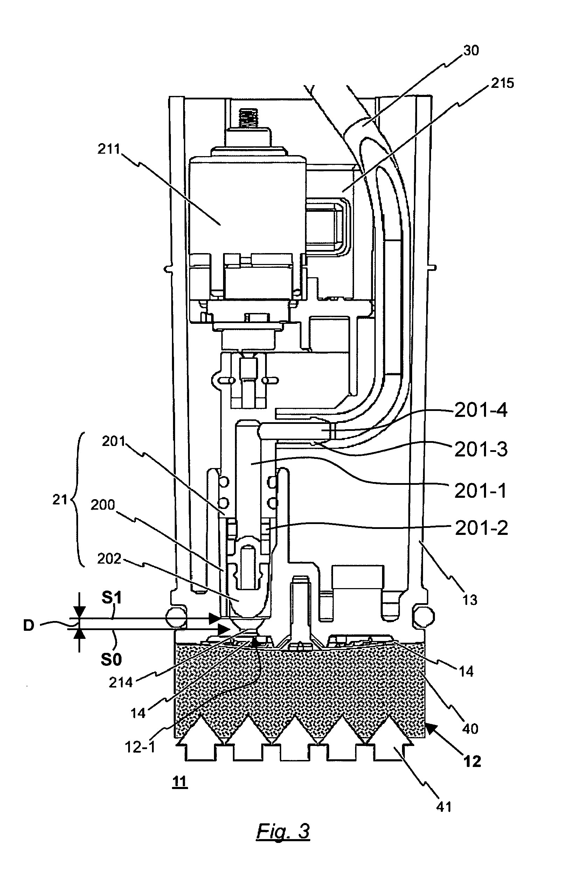

In Fig. 3 ist eine Schnittansicht der Brüheinheit 11 dargestellt, wobei hier ersichtlich ist, dass sowohl die Cremaeinheit 21 als auch das als Schrittmotor ausgebildete Stellglied 211 vollständig innerhalb eines Brühkolbens 13 angeordnet sind. Das Stellglied 211 ist in diesem Fall mittels einer Befestigungseinrichtung 215 innerhalb der Brüheinheit 11 befestigt und gewährleistet so ein sicheres Auf- und Abfahren des Ventilkolbens 201. Wie aus Fig. 3 weiterhin ersichtlich ist, ist am Kaffeedurchlass 214, welcher mit Hilfe des Ventilkolbens 201 und des Verschlusspfropfens 202 mit Gegendruck beaufschlagbar ist, ein Kaffeesieb 14 ausgebildet. Das Kaffeesieb dient dem Zweck, das gepresste Kaffeepulver 40 in der Brühkammer 12 zurückzuhalten und nur die flüssigen Bestandteile, also den gebrühten Kaffee, in Richtung des Kaffeedurchlasses 214 passieren zu lassen.

In Fig. 3 ist der Ventilkolben 201 in einer Situation dargestellt, in welchem der Verschlusspfropfen 202 in einem Abstand D von dem Kaffeedurchlass 214 angeordnet ist (Verfahrposition S1 des Ventilkolbens 201), sodass der Kaffeedurchlass 214 nicht durch den Ventilkolben 201 verschlossen und somit für den in der Brühkammer 12 gebrühten Kaffee durchlässig ist. Wird der Ventilkolben 201 hingegen in die in Fig. 3 dargestellte Verfahrposition S0 bewegt, so verschliesst der Verschlusspfropfen 202 den Kaffeedurchlass 214.

Wie Fig. 3 andeutet, weist der Ventilkolben 201 eine zentrale Längsbohrung 201-1 auf und umfasst mindestens einen Verbindungskanal 201-2, welcher eine Fluidverbindung zwischen der Cremakammer 200 und der zentralen Längsbohrung 201-1 realisiert, und einen Stutzen 201-3, auf den ein Ende der Auslassleitung 30 aufgesteckt ist, wobei der Stutzen 201-3 eine Bohrung 201-4 aufweist, welche eine Fluidverbindung zwischen der zentralen Längsbohrung 201-1 und der Auslassleitung 30 realisiert.

Das unter Druck stehende Brühwasser fliesst zunächst in Richtung auf das Sieb 14 zu, wobei die Fliessrichtung dieses unter Druck stehenden Brühwassers mit einem mit dem Bezugszeichen 41 dargestellten Pfeil angedeutet ist. Der gebrühte Kaffee bzw. das Brühwasser tritt beim Brühvorgang durch das Kaffeesieb 14 und den Kaffeedurchlass 214 in die Cremakammer 200 ein und wird dabei in Abhängigkeit von dem Verfahrweg des Ventilkolbens 201 und dem ggf. mit Hilfe des Verschlusspfropfens 202 ausgeübten Gegendruckes unterschiedlich stark verwirbelt. Das in die als Schlauch ausgebildete Auslassleitung 30 (durch den Verbindungskanal 201-2 und die Bohrungen 201-1 und 201-4) austretende Kaffeegetränk hat dementsprechend eine mehr oder weniger stark ausgeprägte und in ihrer Beschaffenheit veränderliche Crema (abhängig davon, welche Verfahrposition der Ventilkolben 201 während eines Brühvorgangs einnimmt).

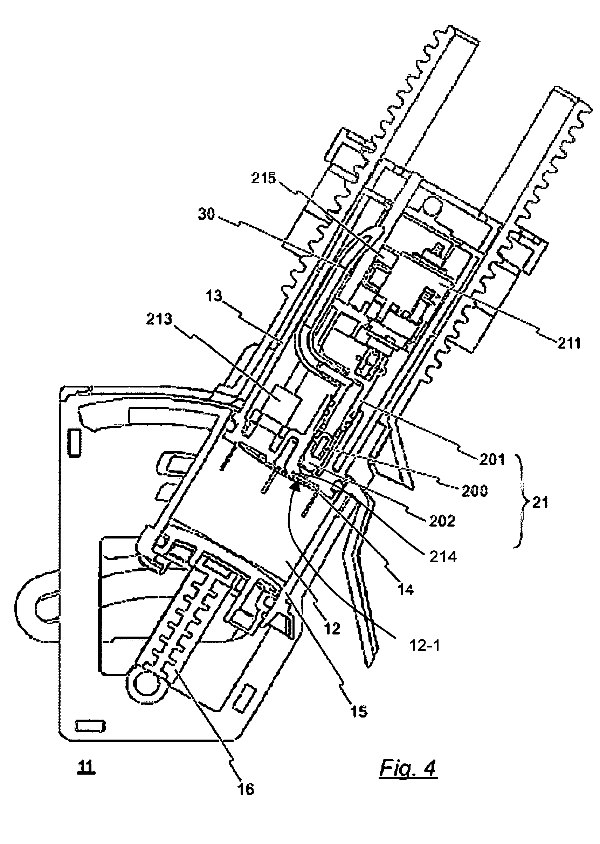

Wie aus dem Schnittbild in Fig. 4 weiterhin ersichtlich ist, ist die Brüheinheit 11 in eine Verschwenkeinrichtung eingebaut, welche mittels Verschwenken des Brühzylinders 15 und mittels Verschieben des Brühkolbens 13 (in der Längsrichtung des Brühkolbens 13) und Verschieben des Ausstosskolbens 16 (in der Längsrichtung des Ausstosskolbens 16) ein automatisches Befüllen der Brühkammer 12 mit Kaffeepulver vor dem Brühvorgang und ein anschliessendes Entleeren der Brühkammer 12 (einschliesslich des Entfernens des Kaffeepulvers und gegebenenfalls - sofern vorhanden - von Resten des Brühwassers aus der Brühkammer 12) nach erfolgten Brühvorgang ermöglicht. Ein derartiges Verschwenken hat auch ein Verschwenken der Auslassleitung 30 gegenüber dem in Fig. 4 nicht dargestellten Kaffeeauslass 31 zur Folge. Das vorstehend genannte automatische Befüllen und Entleeren der Brühkammer 12 ist an sich bekannt, z.B. aus EP 0 559 620 B1, und soll deshalb in diesem Zusammenhang nicht näher erläutert werden. Mittels der erfindungsgemässen Lösung ist es nun möglich, nach dem erfolgten Brühvorgang die Position des Kolbens 201 derart festzulegen, dass verbliebene Restflüssigkeit aus der Auslassleitung 30 durch den Kaffeedurchlass 214 zurück in die Brühkammer 12 und von dort ggf. in eine Restwasserschale oder einen ähnlichen Auffangbehälter zurückfliesst. Hierdurch wird vermieden, dass bei einem Verschwenken des Brühzylinders 15, beispielsweise beim automatischen Befüllen oder Entleeren der Brühkammer 12, in der Auslassleitung 30 verbliebenes Restwasser aus der Auslassmündung 31 herausspritzt.

Wie in Fig. 4 weiterhin zu erkennen ist, ist ein als Drucksensor ausgebildeter Messfühler 213 vorgesehen, welcher während eines Brühvorganges den Brühwasser-Druck misst, welcher auf den Brühkolben 13 wirkt. Dieser Drucksensor 213 ist mit einer in Fig. 4 nicht dargestellten Steuereinrichtung 210 verbunden, welche ihrerseits als Regler ausgebildet ist und ein in Fig. 4 ebenfalls nicht dargestelltes Stellsignal 220 an das Stellglied 211, in Fig. 4 ein Schrittmotor, ausgibt.

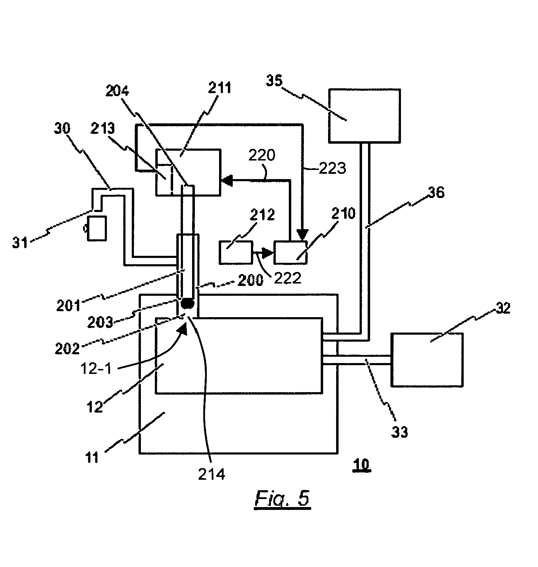

In Fig. 5 ist schliesslich eine schematische Darstellung einer erfindungsgemässen Brühvorrichtung 10 ähnlich zu der in Fig. 1 dargestellt, wobei in diesem Fall kein Drucksensor, sondern ein als Positionssensor ausgebildeter Messfühler 213 vorgesehen ist. In Fig. 5 dargestellt ist eine Integration dieses Positionssensors in ein Gehäuse des Stellglieds 211. Der Positionssensor kann so beispielsweise die Verfahrposition bzw. Eintauchtiefe des Ventilkolbens 201 ermitteln und als Messsignal 223 an die als Regler ausgebildete Steuereinrichtung 210 ausgeben. In Fig. 5 ist schematisch ein solches Verfahren bzw. Verschieben des Ventilkolbens 201 in eine Position angedeutet, in welcher verglichen mit der Darstellung aus Fig. 1 weniger bzw. keine Crema erzeugt wird.

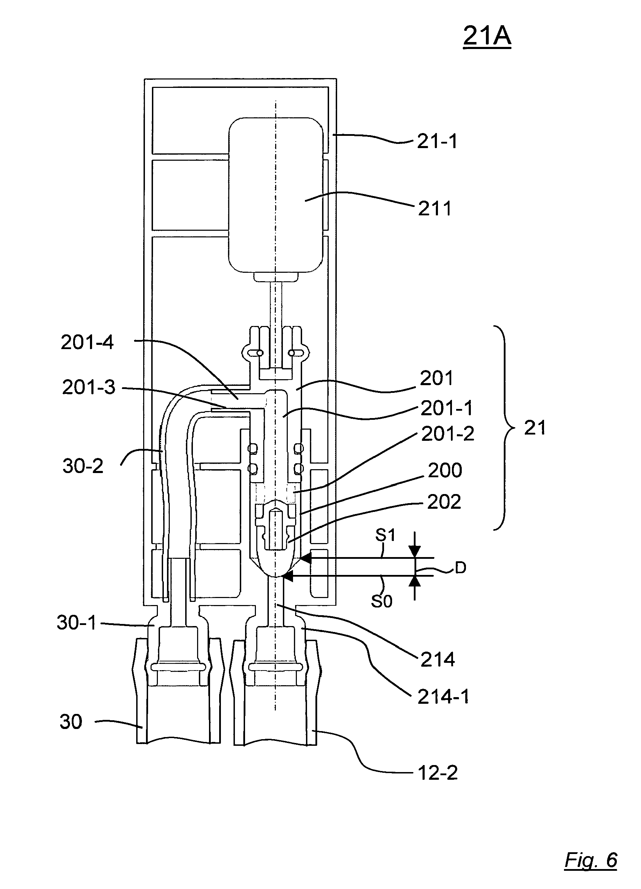

Fig. 6 zeigt eine Baugruppe 21A, welche eine Cremaeinheit 21 und ein Stellglied 211 umfasst, wobei die Cremaeinheit 21 bzw. das Stellglied 211 hinsichtlich Konstruktion und Funktion der Cremaeinheit 21 bzw. dem Stellglied 211 der Brühvorrichtung gemäss Fig. 1-5 entsprechen. In den Fig. 1-6 sind jeweils gleiche bzw. gleich wirkende Bauteile mit denselben Bezugszeichen versehen. Die Anordnung der Cremaeinheit 21 und des Stellgliedes 211 in der Baugruppe 21A gemäss Fig. 6 unterscheidet sich von der Anordnung der Cremaeinheit 21 und des Stellgliedes 211 gemäss Fig. 3 und 4 dadurch, dass die Baugruppe 21A unabhängig von der Brüheinheit 11 platziert werden kann, wobei der jeweilige Abstand zur Brühkammer 12 beliebig gewählt werden kann. Abweichend von der Konstruktion der Brühvorrichtung gemäss Fig. 1-5 können die Cremaeinheit 21 und das Stellglied 211 auch ausserhalb des Brühkolbens 13 der Brühvorrichtung 10 angeordnet werden. Im vorliegenden Beispiel umfasst die Baugruppe 21A ein Gehäuse 21-1, in welchem die Cremaeinheit 21 und das Stellgliedes 211 angeordnet sind. In dieser Variante bildet die Baugruppe 21A eine Einheit, welche als Ganzes an einem vorbestimmten Ort platziert werden kann.

Wie Fig. 6 andeutet, umfasst die Baugruppe 21A einen aussen am Gehäuse 21-1 angeordneten Stutzen 214-1, in welchem ein in die Cremakammer 200 mündender Kaffeedurchlass 214 (entsprechend dem Kaffeedurchlass 214 gemäss Fig. 1 und 3-5) ausgebildet ist. An den Stutzen 214-1 ist ein Ende eines Schlauchs 12-2 anschliessbar, dessen anderes Endes (in Fig. 6 nicht dargestellt) mit der Brüheinheit 11 verbunden werden kann, um eine Verbindung zwischen der Brühkammer 12 und der Cremakammer 200 herzustellen, so dass in der Brühkammer 200 gebrühter Kaffee über den Schlauch 12-2 in den Kaffeedurchlass 214 fliessen kann.

Die Baugruppe 21A gemäss Fig. 6 könnte beispielsweise die Cremaeinheit 21 und dass Stellglied 211 in der Brüheinheit 11 gemäss Fig. 3 und 4 ersetzen, wobei lediglich der Kaffeedurchlass 214 der Baugruppe 21A mittels des Schlauchs 12-2 mit der Austrittsöffnung 12-1 der Brühkammer 12 zu verbinden wäre. Anstelle des Schlauchs 12-2 kann natürlich auch eine andere für Flüssigkeiten geeignete Leitung verwendet werden, z.B. eine Rohrleitung.

In Fig. 6 ist der Ventilkolben 201 in einer Situation dargestellt, in welcher der Verschlusspfropfen 202 in der Verfahrposition SO angeordnet ist und dabei den Kaffeedurchlass 214 verschliesst. Der Ventilkolben 201 ist mittels des Stellgliedes 211 in seiner Längsrichtung bewegbar, beispielsweise in die in Fig. 6 dargestellte Verfahrposition S1, in welcher der Verschlusspfropfen 202 den Kaffeedurchlass 214 nicht verschliesst, sodass eine Fluidverbindung zwischen dem Kaffeedurchlass 214 und der Bohrung 201-4 über die Cremakammer 200, den Verbindungskanal 201-2 und die zentrale Längsbohrung 201-1 hergestellt ist.

Wie Fig. 6 weiterhin andeutet, umfasst die Baugruppe 21A einen am Gehäuse 21-1 angeordneten, mit einer durchgehenden Längsbohrung versehenen Stutzen 30-1, welcher dazu dient, eine Fluidverbindung zwischen der Bohrung 201-4 und der Auslassleitung 30 für das jeweils erzeugte Kaffeegetränk herzustellen. Wie Fig. 6 andeutet, weist der Stutzen 30-1 zu diesem Zweck zwei Enden auf, wobei eines dieser Enden mit einem Ende der Auslassleitung 30 verbindbar ist und das andere Ende des Stutzens 30-1 über einen Schlauch 30-2 mit dem Stutzen 201-3 des Ventilkolbens 201 verbunden ist, sodass das jeweils erzeugte Kaffeegetränk aus der Cremakammer 200 über den Schlauch 30-2 in die Auslassleitung 30 fliessen kann.

## Patentansprüche

1. Brühvorrichtung (10) zum Erzeugen eines Kaffeegetränks, wobei die Brühvorrichtung (10) aufweist:
- eine Brüheinheit (11) mit einer Brühkammer (12) zum Brühen von Kaffee;
- eine Cremaeinheit (21) zur Erzeugung einer Crema mit einer mit der Brühkammer (11) über einen Kaffeedurchlass (214) verbundene Cremakammer (200) und einem in der Cremakammer (200) relativ zum Kaffeedurchlass (214) verfahrbaren Ventilkolben (201) zum Öffnen und/oder Verschliessen des Kaffeedurchlasses (214); und
- eine Auslassmündung (31) für das jeweilige Kaffeegetränk,
wobei die Cremaeinheit (21) mit der Auslassmündung (31) mittels einer Auslassleitung (30) derart verbunden ist, dass zum Erzeugen des jeweiligen Kaffeegetränks während eines Brühvorgangs in der Brüheinheit (11) gebrühter Kaffee den Kaffeedurchlass (214) und die Cremakammer durchströmen und zur Auslassmündung (31) gelangen kann,
**dadurch gekennzeichnet, dass**
der Ventilkolben (201) derart verfahrbar ist, dass er in mehrere verschiedene vorgegebene Verfahrpositionen (SO, S1) relativ zu dem Kaffeedurchlass (214) bringbar ist,
wobei verschiedene aufeinanderfolgende Brühvorgänge zur Erzeugung verschiedener Kaffeegetränke derart realisierbar sind, dass der Ventilkolben (201) bei einem der jeweiligen Brühvorgänge eine andere der vorgegebenen Verfahrpositionen (SO, S1) einnimmt als bei einem anderen der jeweiligen Brühvorgänge, und
wobei die Cremaeinheit (21) derart ausgebildet ist, dass der während des jeweiligen Brühvorgangs gebrühte Kaffee in der Cremakammer (200) abhängig von der jeweiligen vorgegebenen Verfahrposition (SO, S1) des Ventilkolbens (201) unterschiedlich stark durchwirbelbar ist.

2. Brühvorrichtung (10) nach Anspruch 1,
wobei die Brühvorrichtung (10) ferner eine Steuereinrichtung (210) und ein Stellglied (211) aufweist, wobei das Stellglied (211) ausgelegt ist, den Ventilkolben (201) gemäss einem Stellsignal (220) in eine der vorgegebenen Verfahrpositionen (SO, S1) zu verfahren, und wobei die Steuereinrichtung (210) ausgelegt ist, das Stellsignal (220) zu erzeugen und dem Stellglied (211) zuzuführen.

3. Brühvorrichtung (10) nach Anspruch 2,
wobei die Steuereinrichtung (210) als Regler ausgebildet ist, wobei die Brühvorrichtung (10) ferner eine Sollwert-Vorgabeeinrichtung (212) und einen Messfühler (213) aufweist, wobei der Messfühler (213) ausgelegt ist, eine Messgrösse zu erfassen und dem Regler als Messsignal (223) zuzuführen, und wobei die Sollwert-Vorgabeeinrichtung (212) ausgelegt ist, einen Sollwert zu erzeugen und als Vorgabesignal (222) dem Regler zuzuführen.

4. Brühvorrichtung (100) nach Anspruch 3,
wobei der Sollwert ein zeitlich statischer Verfahrpositions-Sollwert oder ein zeitlich variabler Verfahrpositions-Sollwert und wobei der Messfühler (213) als Positionssensor ausgebildet und derart an dem Ventilkolben (201) oder am Stellglied (211) befestigt ist, dass die momentane Verfahrposition (SO, S1) des Ventilkolbens (201) vom Positionssensor erfasst wird.

5. Brühvorrichtung (100) nach Anspruch 3,
wobei ein zeitlich statischer Drucksollwert oder ein zeitlich variabler Drucksollwert ist, und wobei der Messfühler (213) als Drucksensor ausgebildet und derart an der Brühkammer (12) befestigt ist, dass ein Momentandruck des Brühwassers in der Brühkammer (12) auf den Drucksensor einwirkt.

6. Brühvorrichtung (10) nach einem der Ansprüche 2 bis 5, wobei die Cremaeinheit (21) und das Stellglied (211) in einem Brühkolben (13) angeordnet sind.

7. Brühvorrichtung (10) nach einem der Ansprüche 2 bis 5, wobei die Cremaeinheit (21) zusammen mit dem Stellglied (211) eine separate Baugruppe (21A) bildet, welche von der Brüheinheit (11) räumlich getrennt ist, wobei eine Austrittsöffnung (12-1) der Brühkammer (12) mit dem Kaffeedurchlass (214) der Cremaeinheit (21) über eine Rohrleitung oder einen Schlauch (12-1) verbunden ist.

8. Brühvorrichtung (10) nach einem der Ansprüche 2 bis 7, wobei das Stellglied (211) als elektromechanischer Antrieb oder Schrittmotor ausgebildet ist.

9. Verfahren zum Erzeugen eines Kaffeegetränks mit einer Brühvorrichtung (10), wobei die Brühvorrichtung (10) aufweist:
- eine Brüheinheit (11) mit einer Brühkammer (12) zum Brühen von Kaffee;
- eine Cremaeinheit (21) zur Erzeugung einer Crema mit einer mit der Brühkammer (11) über einen Kaffeedurchlass (214) verbundene Cremakammer (200) und einem in der Cremakammer (200) relativ zum Kaffeedurchlass (214) verfahrbaren Ventilkolben (201) zum Öffnen und/oder Verschliessen des Kaffeedurchlasses (214); und
- eine Auslassmündung (31) für das jeweilige Kaffeegetränk,
wobei die Cremaeinheit (21) mit der Auslassmündung (31) mittels einer Auslassleitung (30) derart verbunden ist, dass zum Erzeugen des jeweiligen Kaffeegetränks während eines Brühvorgangs in der Brüheinheit (11) gebrühter Kaffee den Kaffeedurchlass (214) und die Cremakammer (200) durchströmen und zur Auslassmündung (31) gelangen kann, wobei der Ventilkolben (201) derart verfahrbar ist, dass er in mehrere verschiedene vorgegebene Verfahrpositionen (SO, S1) relativ zu dem Kaffeedurchlass (214) bringbar ist und wobei die Cremaeinheit (21) derart ausgebildet ist, dass der während des jeweiligen Brühvorgangs gebrühte Kaffee in der Cremakammer (200) abhängig von der jeweiligen vorgegebenen Verfahrposition (SO, S1) des Ventilkolbens (201) unterschiedlich stark durchwirbelbar ist,
wobei zum Erzeugen eines ersten Kaffeegetränks während einer Realisierung eines ersten Brühvorgangs Kaffee in der Brühkammer gebrüht wird und vor oder während der Realisierung des ersten Brühvorgangs der Ventilkolben (201) in eine der vorgegebenen Verfahrpositionen (SO, S1) gebracht wird und
wobei zum Erzeugen eines zweiten Kaffeegetränks während einer Realisierung eines auf den ersten Brühvorgang folgenden zweiten Brühvorgangs Kaffee in der Brühkammer gebrüht wird und vor oder während der Realisierung des zweiten Brühvorgangs der Ventilkolben (201) in eine andere der vorgegebenen Verfahrpositionen (SO, S1) gebracht wird.

10. Verfahren nach Anspruch 9,
wobei die Brühvorrichtung (10) ferner eine als Regler ausgebildete Steuereinrichtung (210), ein Stellglied (211) und eine Sollwert-Vorgabeeinrichtung (212) sowie einen Messfühler (213) aufweist, wobei das Stellglied (211) ein Stellsignal (220) erhält und gemäss dem Stellsignal (220) den Ventilkolben (201) in eine der vorgegebenen Verfahrpositionen (SO, S1) bringt, wobei die Steuereinrichtung (210) das Stellsignal (220) erzeugt und dem Stellglied (211) zuführt, wobei der Messfühler (213) eine Messgrösse erfasst und dem Regler als Messsignal (223) zuführt, wobei die Sollwert-Vorgabeeinrichtung (212) einen Sollwert erzeugt und als Vorgabesignal (222) dem Regler zuführt, wobei der mittels der Sollwert-Vorgabeeinrichtung (212) erzeugte Sollwert durch ein gespeichertes Profil vorgegeben wird, welches einer Crema mit vorbestimmten Eigenschaften zugeordnet ist.

11. Verfahren nach einem der Ansprüche 9 oder 10,
wobei nach dem Erzeugen des jeweiligen Kaffeegetränks und einer Ausgabe des Kaffeegetränks durch die Auslassmündung (31) die Verfahrposition (S1) des Ventilkolbens (201) derart eingestellt wird, dass in der Auslassleitung (30) verbliebene, nicht aus der Auslassmündung (31) ausgegebene Flüssigkeit, insbesondere Reste des Kaffeegetränkes, in die Brühkammer (12) zurückfliesst und/oder zurückgesaugt wird.

12. Verfahren nach Anspruch 11,
wobei die Brühvorrichtung (10) ferner ein Kaffeesieb (14) aufweist, welches zwischen der Cremaeinheit und der Brühkammer (12) am Kaffeedurchlass (214) vorgesehen ist, und wobei die verbliebene Flüssigkeit aus der Auslassleitung (30) durch das Kaffeesieb (14) zurückfliesst bzw. zurückgeführt wird.

13. Verfahren nach einem der Ansprüche 11 bis 12,
wobei die in die Brühkammer (12) zurückgeflossene und/oder zurückgeführte Flüssigkeit in einen Restwasserbehälter entleert wird.
